# EUROPÄISCHE PATENTSCHRIFT

(11) **EP 1 477 794 B1**
(45) Veröffentlichungstag und Bekanntmachung des Hinweises auf die Patenterteilung: **05.08.2009**
(21) Anmeldenummer: 04008175.4
(22) Anmeldetag: 03.04.2004
(51) Int. Cl.: G01N 21/90, G01N 21/952

(54) **Inspektionsvorrichtung für Flaschen**
Apparatus for inspection of bottles
Appareil pour inspection des bouteilles

(30) Priorität: 16.05.2003 DE 10322459
(43) Veröffentlichungstag der Anmeldung: 17.11.2004
(73) Patentinhaber: KRONES AG, 93073 Neutraubling (DE)
(72) Erfinder: Niedermeier, Anton, 93326 Abensberg (DE)
(74) Vertreter: Grünecker, Kinkeldey, Stockmair & Schwanhäusser Anwaltssozietät

(56) Entgegenhaltungen:
- EP-A- 0 060 918
- EP-A- 0 657 732
- JP-A- 2002 277 402
- US-A- 6 072 575
- US-A1- 2001 048 524
- US-A1- 2002 162 966

## Beschreibung

Die Erfindung betrifft eine Inspektionsvorrichtung für Flaschen oder dgl. Gefäße gemäß dem Oberbegriff des Anspruchs 1.

Aus US 4 509 081 ist eine Inspektionsvorrichtung zur Etikettenkontrolle an Flaschen bekannt. Die zu überprüfenden Flaschen werden in einer einspurigen Reihe an einer Beleuchtungseinrichtung vorbeigeführt und von der Seite quer zu ihrer Hochachse mit Licht beaufschlagt. Die zur Abbildung der Flaschen vorgesehene Kamera betrachtet die zu untersuchenden Flaschen von der gleichen Seite, von der auch die Beleuchtung erfolgt; die Inspektion erfolgt somit im Auflichtverfahren.

DE 199 04 732 A1 und DE 195 38 013 A1 offenbaren Inspektionsvorrichtungen zur Konturerkennung bzw. Dimensionsbestimmung von Flaschen. Hier erfolgen Bildaufnahme und Beleuchtung von gegenüberliegenden Seiten einer zu prüfenden Flasche, d.h. der Inspektionsvorgang findet bei Gegenlicht statt, wobei transparente Flaschen durchleuchtet werden (Durchlichtverfahren).

Desweiteren sind kombinierte Inspektionsvorrichtungen bekannt, die sowohl eine Etikettenkontrolle als auch Konturerkennung durchführen können. Für die Auflichtbeleuchtung zur Etiketten- bzw. Druckbilderkennung sowie die Durchlichtbeleuchtung für die Konturkontrolle werden zwei aus verschiedenen Richtungen strahlende Beleuchtungseinrichtungen eingesetzt. Bei der Verwendung von zwei Lichtquellen hat sich gezeigt, dass nachteiligerweise die Abstimmung der Einzelbeleuchtungsstärke und -dauer problematisch ist. Selbst bei anfänglich optimaler Einstellung ist ein Auseinandertriften der Einstellwerte mit zunehmendem Alter oder Temperatur der Lichtquellen nicht zuverlässig vermeidbar.

EP-A-0 657 732 beschreibt eine Vorrichtung zur Aufsicht-Darstellung des Mündungsbereichs eines Behälters, bei der das Licht einer ringförmigen, über dem Behälter angeordneten Lichtquelle über optische Leuchtflächen schräg auf die Behältermündung und den daran angrenzenden Bereich der Mantelfläche gerichtet wird. Dadurch wird sowohl Durchlicht als auch Auflicht erzeugt. Der bildseitige Strahlengang verläuft durch die zentrale Öffnung der Lichtquelle senkrecht nach oben.

US 2001/048524 A1 beschreibt ferner eine Vorrichtung zur Inspektion eines Flaschenverschlusses mit Hilfe von Auflicht, dessen Reflexionen an der zu untersuchenden Oberfläche durch eine über der Flasche angeordnete Kamera abgebildet werden. Die Lichtquelle besteht aus einer ringförmigen Ansammlung von Leuchtdioden, deren Licht schräg über jeweils einzeln verstellbare Spiegelelemente auf den Flaschenverschluss gerichtet wird.

Davon ausgehend liegt der Erfindung die Aufgabe zu Grunde, eine Inspektionsvorrichtung mit verbesserter und vereinfachter Beleuchtung anzugeben.

Gelöst wird diese Aufgabe durch die kennzeichnenden Merkmale des Anspruchs 1.

Durch die erfindungsgemäße Maßnahme, die äußere Mantelfläche einer zu untersuchenden Flasche von nur noch einer einzigen Beleuchtungseinrichtung in Verbindung mit optischen Mitteln sowohl mit Durchlicht als auch Auflicht zu beaufschlagen, ist die Abstimmung der Beleuchtungsintensitäten aus den verschiedenen Richtungen auf Grund der nur einen für beide Aufgaben gemeinsamen Lichtquelle leichter zu bewerkstelligen und bleibt während der gesamten Betriebsdauer im gleichen Verhältnis.

Die Beleuchtungseinrichtung ist oberhalb einer zu untersuchenden Flasche angeordnet und bestrahlt diese hauptsächlich von außen überwiegend längs zur Flaschenhochachse, insbesondere unter einem spitzen Winkel schräg von oben.

Ein Teil des von der Beleuchtungseinrichtung stammenden Lichts ist durch die genannten optischen Mittel annähernd quer zur Flaschenachse umlenkbar und wird zumindest größtenteils radial verlaufend auf die Mantelfläche der Flasche gerichtet. Die optischen Mittel sind als oder -reflektierende Flächenelemente ausgebildet, z.B. als ebene Platten mit heller Oberfläche. Dazu sind u.a. weiße Kunststoffplatten oder dgl. verwendbar. Diese optischen Mittel können seitlich neben einer die Flaschen kontinuierlich in einer einspurigen Reihe transportierenden Transporteinrichtung angeordnet sein, wobei auf der gegenüberliegenden Seite der Transporteinrichtung eine Bildaufnahmeeinrichtung die Mantelfläche einer zu untersuchenden Flasche annähernd quer zur Flaschenachse abbildet.

Zwischen der Bildaufnahmeeinrichtung und einer zuuntersuchenden Flasche können optische Mittel, insbesondere Spiegel, zur Erzeugung mehrerer die Mantelfläche einer Flasche aus umfänglich verschiedenen Richtungen durchsetzenden Abbildungsstrahlengängen angeordnet sein.

In Verlängerung der Abbildungsstrahlengänge befinden sich die vorhergehend genannten lichtstreuenden oder lichtreflektierenden Flächenelemente. Sie sind bevorzugt senkrecht zur optischen Achse des jeweils zugeordneten Abbildungsstrahlengangs positioniert.

Als optische Mittel sind alternativ auch Lichtleiter, Prismen, mit Linsen kombinierte Spiegel oder Teilerspiegel denkbar. Sie können ebenfalls so ausgebildet und angeordnet sein, dass eine zu überprüfende Flasche aus mehreren Richtungen gleichzeitig beleuchtbar ist.

Gemäß einer vorteilhaften Weiterbildung sind die Flächenelemente zur Einstellung der Beleuchtungsintensität relativ, insbesondere radial, zu einer zu untersuchenden Flasche und der darüber angeordneten Lichtquelle einstellbar, bevorzugt längs zur optischen Achse eines zugeordneten Abbildungsstrahlengangs. Eine Abstandsverstellung der Flächenelemente bezüglich einer zu untersuchenden Flasche ist mit nur sehr geringem Aufwand verhältnismäßig schnell vornehmbar.

Die über der Transporteinrichtung angeordnete Beleuchtungseinrichtung besitzt eine Lichtausstrittsfläche, die größer als die senkrechte Projektionsfläche einer zu untersuchenden Flasche ist. Damit kann die Mantelfläche einer Flasche wenigstens annähernd über ihre gesamte Höhe zuverlässig von außen mit Licht beaufschlagt werden, insbesondere in Verbindung mit zwischen der Beleuchtungseinrichtung und der Flasche angeordneten Linsen, z.B. Fresnellinsen. Sowohl von der Mantelfläche nach außen reflektiertes Licht als auch direkt von der Lampe auf die lichtstreuenden oder lichtreflektierenden Flächenelemente fallendes Licht wird überwiegend quer zur Flaschenachse umgelenkt. Auf diese Weise ist die äußere Kontur einer Flasche vor dem durch die Flächenelemente gebildeten hellen Hintergrund einwandfrei erkenn- und auswertbar.

Weitere vorteilhafte Ausgestaltungen der. Erfindung sind Gegenstand der verbleibenden Unteransprüche.

Nachfolgend wird ein bevorzugtes Ausführungsbeispiel anhand der Figuren erläutert. Es zeigt:
- Fig. 1: eine Draufsicht auf eine Inspektionsvorrichtung und

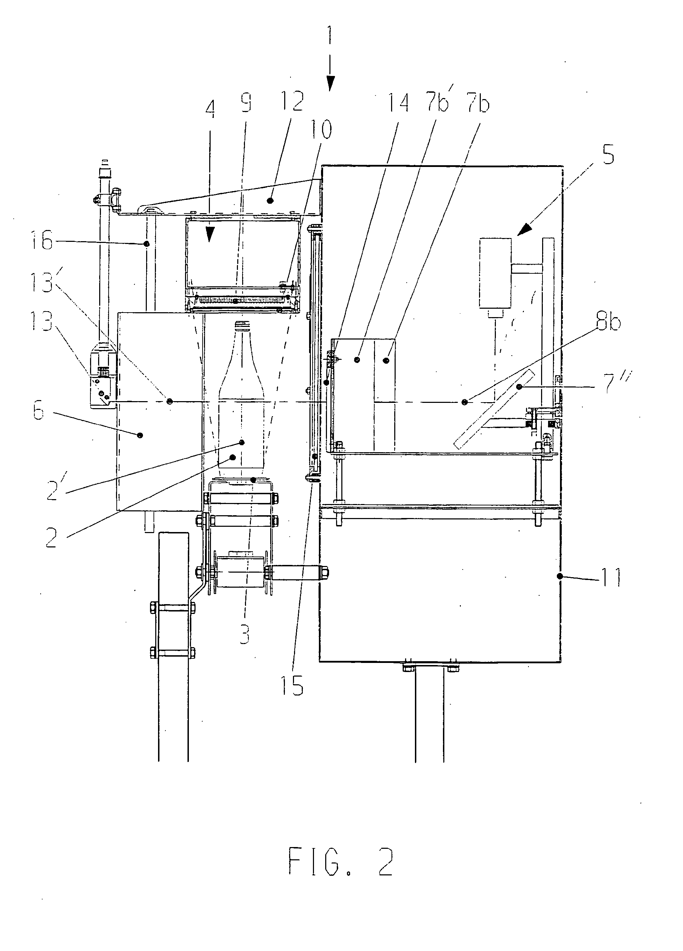

- Fig. 2: eine Ansicht der Inspektionsvorrichtung entlang der Linie A-A in Fig. 1 in Transportrichtung der Flaschen betrachtet.

Die Inspektionsvorrichtung 1 ist an einem Flaschen 2 in einer einspurigen Reihe mit zumindest geringen Zwischenabständen transportierenden Transporteur 3 angeordnet, der die zu untersuchenden Flaschen 2 aufrechtstehend mittels einer reibschlüssig an ihrer Bodenfläche angreifenden Scharnierbandkette kontinuierlich befördert. Die Inspektionsvorrichtung 1 weist eine in einem seitlich neben dem Transporteur 3 stehenden Gehäuse 11 untergebrachte Bildaufnahmeeinrichtung 5, z.B. CCD-Kamera auf.

An der zum Transporteur 3 weisenden Seite des Gehäuses 11 ist ein den Transporteur mit Zwischenabstand übergreifender Ausleger 12 befestigt, an dessen Unterseite eine mittig über dem Transporteur 3 ausgerichtete Beleuchtungseinrichtung 4 angebracht ist. An dem selben Ausleger 12 sind lichtreflektierende bzw. -streuende Flächenelemente 6 hängend gelagert. Diese Flächenelemente 6 befinden sich auf der der Bildaufnahmeeinrichtung 5 gegenüberliegenden Seite des Transporteurs 3 radial neben der Mantelfläche einer zu untersuchenden Flasche 2 und erstrecken sich parallel zur Flaschenachse 2' verlaufend über deren gesamte Höhe.

Außerdem ist an dem Ausleger 12 ebenfalls hängend ein Lichttaster 13 angeordnet, dessen optische Achse 13' die Förderbahn der Flaschen annähernd rechtwinklig kreuzt. Dem Lichttaster gegenüberliegend ist im Gehäuse 11 ein Reflektor 14 angeordnet. Er befindet sich unmittelbar hinter einer in eine Gehäuseöffnung an der zum Transporteur 3 weisenden Seite eingepasste Schutzscheibe 15.

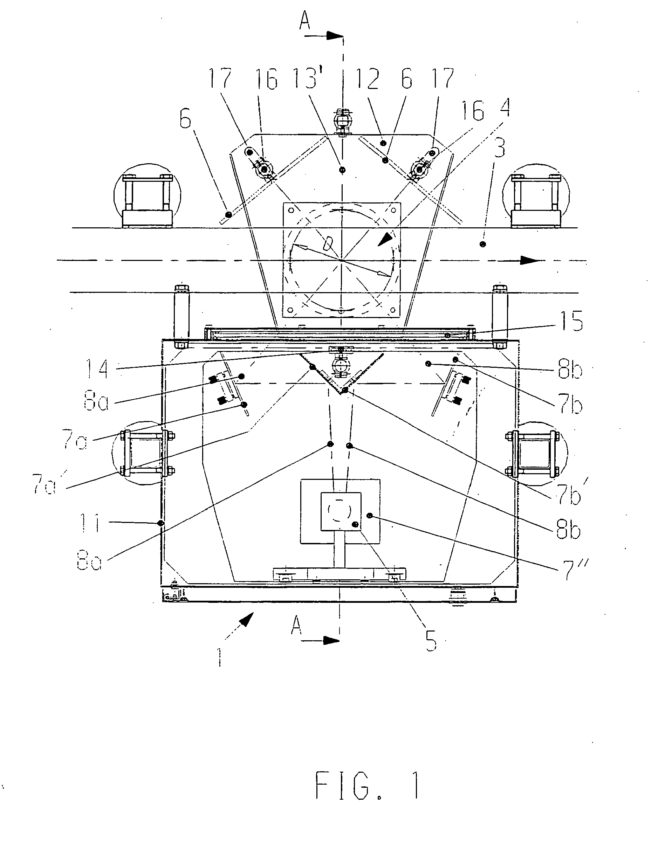

Insbesondere aus der Figur 1 ist gut zu erkennen, dass die beiden Flächenelemente 6 jeweils mit einem in etwa 40° bis 45° betragenden Winkel zur Förderrichtung des Transporteurs 3 schräg zueinander weisend positioniert sind, wobei der radiale Abstand der ebenen, lotrecht nach unten hängenden Flächenelemente 6 zu einer zu prüfenden Flasche 2 bzw. der darüber konzentrisch angeordneten Beleuchtungseinrichtung 4 verstellbar ist. Hierzu sind die die Flächenelemente 6 haltenden Stangen 16 mit schräg zur Förderrichtung im Ausleger 12 eingeformte Schlitze 17 durchgreifenden Klemmschrauben befestigt.

Zwischen den beiden Flächenelementen 6 befindet sich ein freier Spalt, durch den der zur Erzeugung von Triggersignalen dienende Lichttaster 13 vorbeilaufende Flaschen 2 vor dem Reflektor 14 erkennen kann.

Die bereits erwähnte Beleuchtungseinrichtung 4 besitzt als Leuchtmittel eine Vielzahl von dichtgepackt auf einer ebenen, horizontal angeordneten Trägerscheibe angeordnete LEDs 9 mit einer darunter liegenden Fresnellinse 10, die eine kreisrunde Lichtaustrittsfläche der Beleuchtungseinrichtung 4 definiert, deren Durchmesser D größer als der Flaschendurchmesser einer mit ihrer Achse 2' konzentrisch darunterstehenden Flasche 2 ist.

Ferner befinden sich im Gehäuse 11 im Bereich zwischen einer zu überprüfenden Flasche 2 und der Bildaufnahmeeinrichtung 5 mehrere auf einer horizontalen Stützplatte vertikal stehende, ebene Umlenkspiegel 7a, 7b, 7a', 7b', die zwei umfänglich versetzt auf die Mantelfläche einer Flasche 2 treffende, gleich lange Strahlengänge 8a,8b zur seitlichen Abbildung der Flaschenmantelfläche über deren gesamte Höhe erzeugen.

Von den beiden Strahlengängen 8a,8b ist in Fig.1 jeweils nur die optische Achse angedeutet. Die Ausrichtung der beiden äußeren Spiegel 7a,7b ist so getroffen, dass sich die Strahlengänge über dem Transporteur 3 im Bereich der Flaschenachse 2' einer konzentrisch unter der kreisrunden Lichtaustrittsfläche der Beleuchtungseinrichtung 4 stehenden Flasche 2 schneiden und rechtwinklig zur lichtstreuenden Oberfläche der Flächenelemente 6 verlaufen.

Die erwähnten Schlitze 17 sind zu diesen Strahlengängen 8a,8b fluchtend ausgerichtet. Ein für beide Strahlengänge gemeinsamer, im Bereich vor der vertikal nach unten blickenden, höhenverstellbaren CCD-Kamera 5 angeordneter Umlenkspiegel 7" gestattet eine geringe Bautiefe des Gehäuses 11.

Nachfolgend wird die Funktionsweise der Inspektionsvorrichtung 1 erläutert:

Durch den kontinuierlich angetriebenen Transporteur 3 wird eine zu inspizierende, beispielsweise von einer nicht dargestellten Waschmaschine kommende Flasche 2 der Inspektionsvorrichtung 1 in Pfeilrichtung zugeführt und passiert dabei einen vom Lichttaster 13 rechtwinklig zur Förderrichtung in horizontaler Ebene ausgesandten Lichtstrahl 13'. Der Lichttaster 13 sendet daraufhin ein Signal an eine nicht dargestellte Steuerung, die gleichzeitig die Beleuchtungseinrichtung 4 und die CCD-Kamera 5 ansteuert. Die in diesem Augenblick mit ihrer Achse 2'konzentrisch unter der den Durchmesser D aufweisenden kreisrunden Lichtaustrittsfläche der Beleuchtungseinrichtung 4 ausgerichtete Flasche 2 wird von den kurzzeitig aufleuchtenden LEDs 9 von oben bestrahlt, wobei das die Fresnellinse 10 durchdringende Licht mit ansteigendem radialen Abstand vom Zentrum bzw. Mittelpunkt zunehmend zur Achse 2' geneigt auf die gesamte äußere Mantelfläche gerichtet wird.

Das von oben auf die zur CCD-Kamera 5 weisende Seite der Flasche 2 treffende Licht wird überwiegend reflektiert, und zwar größtenteils radial nach außen in Richtung zur Schutzscheibe 15 im Gehäuse 11. Sowohl das über die Spiegel 7a, 7a', 7'' auf dem Pfad des Strahlengangs 8a als auch das über die Spiegel 7b, 7b', 7" auf dem Pfad des Strahlengangs 8b zur CCD-Kamera 5 gelangende Auflicht erzeugt jeweils ein gleich großes Bild von der Seitenwand der Flasche 2, aus dem beispielsweise ein auf der Flasche eventuell vorhandenes Einbrandetikett erkennbar ist.

Gleichzeitig wird das von oben auf die von der CCD-Kamera 5 wegweisende Seite der Flasche 2 fallende Licht größtenteils seitlich in Richtung zu den Flächenelementen 6 reflektiert. Außerdem trifft auf die Flächenelemente 6 auch unmittelbar von den einen Abstrahlkegel aufweisenden LEDs 9 kommendes Licht. Beide Anteile werden von den Flächenelementen 6 gestreut bzw. reflektiert und dabei zu einem großen Teil quer zur Achse 2' der Flasche 2 umgelenkt. Bei transparenten Flaschen durchdringen die hauptsächlich auf den Mittelabschnitt, d.h. zentrumsnahen Bereich der Mantelfläche fallenden Lichtanteile die Flaschenwandungen, während das auf die stärker gekrümmten Randbereiche treffende Licht überwiegend reflektiert wird. Ein Teil dieses reflektierten und in die Strahlengänge 8a,8b gelangenden Lichts kann die zuvor genannte Auflichtbeleuchtung verstärken. Das die Flaschenwandungen durchdringende, in die Strahlengänge 8a,8b gelangende Licht erreicht ebenfalls die CCD-Kamera 5 und bildet die Flaschenseitenwand vor den einen hellen Bildhintergrund liefernden Flächenelementen 6 gut umrißkonturiert ab. Auf diese Weise sind die Kontur und ggf. vorhandene Etiketten einwandfrei abbildbar.

Die Bildauswertung erfolgt durch eine in die CCD-Kamera 5 integrierte Auswertelektronik in Verbindung mit gespeicherter Bildverarbeitungssoftware. Vorgebbaren Kriterien entsprechend können Signale erzeugt werden, die beispielsweise zur Ansteuerung von der Inspektionsvorrichtung 1 stromab nachgeordneten, nicht dargestellten Sortier- und/oder Ausschleuseinrichtungen verwendbar sind, um Flaschen mit unterschiedlicher Kontur zu sortieren und/oder solche mit Etiketten, insbesondere Einbrandetiketten, von etikettenfreien Flaschen zu separieren.

## Patentansprüche

1. Inspektionsvorrichtung(1) für Flaschen(2) oder dgl. Gefäße mit Beleuchtungseinrichtungen(4) für eine Durchlicht- und Auflichtbeleuchtung und wenigstens einer Bildaufnahmeeinrichtung(5) zum Abbilden der Mantelfläche der beleuchteten Flaschen und Auswerten der Abbildungen, insbesondere in Bezug auf die Kontur von Flaschen und/oder Etiketten bzw. Abbildungen auf Flaschen, bei der die Mantelfläche einer zu untersuchenden Flasche(2) von nur einer einzigen Beleuchtungseinrichtung(4) in Verbindung mit optischen Mitteln(6) sowohl mit Durchlicht als auch Auflicht beaufschlagbar ist, und die Beleuchtungseinrichtung(4) oberhalb einer zu untersuchenden Flasche(2) angeordnet ist,
**dadurch gekennzeichnet, dass**
die Beleuchtungseinrichtung die Flasche überwiegend parallel zu ihrer Flaschenachse(2') von oben beleuchtet,
ein Teil des von der Beleuchtungseinrichtung(4) stammenden Lichts durch die optischen Mittel(6) annähernd quer zur Flaschenachse(2') umlenkbar und auf die Mantelfläche der Flasche(2) richtbar ist,
die optischen Mittel(6) als lichtstreuende oder reflektierende Flächenelemente ausgebildet sind, und
die Lichtaustrittsfläche der Beleuchtungseinrichtung(4) größer als die senkrechte Projektionsfläche einer zu prüfenden Flasche(2) ist.

2. Vorrichtung nach Anspruch 1,
**dadurch gekennzeichnet, dass**
die Bildaufnahmeeinrichtung(5) die Mantelfläche der Flasche(2) annähernd quer zur Flaschenachse(2') abbildet.

3. Vorrichtung nach Anspruch 1 oder 2,
**dadurch gekennzeichnet, dass**
eine Transporteinrichtung(3) zum insbesondere kontinuierlichen Fördern von Flaschen(2) vorhanden ist, über der die Beleuchtungseinrichtung(4) angeordnet ist.

4. Vorrichtung nach Anspruch 3,
**dadurch gekennzeichnet, dass**
die Bildaufnahmeeinrichtung(5) seitlich neben der Transporteinrichtung(3) angeordnet ist.

5. Vorrichtung nach Anspruch 3 oder 4,
**dadurch gekennzeichnet, dass**
die optischen Mittel(6) seitlich neben der Transporteinrichtung(3) angeordnet sind, vorzugsweise an der der Bildaufnahmeeinrichtung(5) gegenüberliegenden Seite der Transporteinrichtung.

6. Vorrichtung nach wenigstens einem der vorhergehenden Ansprüche 1 bis 5,
**dadurch gekennzeichnet, dass**
zwischen der Bildaufnahmeeinrichtung(5) und einer zu untersuchenden Flasche(2) Mittel(7a,7b,7a',7b'), insbesondere Spiegel, zur Erzeugung mehrerer die Mantelfläche der Flasche(2) aus umfänglich verschiedenen Richtungen durchsetzenden Abbildungsstrahlengängen(8a,8b) angeordnet sind.

7. Vorrichtung nach Anspruch 1 und 6,
**dadurch gekennzeichnet, dass**
die Flächenelemente(6) in Verlängerung der Abbildungsstrahlengänge(8a,8b) angeordnet sind, insbesondere senkrecht zur optischen Achse des zugeordneten Abbildungsstrahlengangs.

8. Vorrichtung nach wenigstens einem der vorhergehenden Ansprüche 1 bis 7,
**dadurch gekennzeichnet, dass**
die Beleuchtungseinrichtung(4) eine Linse(10) aufweist.

9. Vorrichtung nach Anspruch 1 und 8,
**dadurch gekennzeichnet, dass**
das Licht mit steigendem radialen Abstand vom Zentrum der Beleuchtungseinrichtung(4) mit einem zunehmend größeren Winkel zur Flaschenachse(2') geneigt austritt.

## Claims

1. Inspection apparatus (1) for bottles (2) or similar containers, with illumination devices (4) for a transmitted light and reflected light illumination and at least one image recording device (5) for imaging the surface area of the illuminated bottles and evaluating the images, in particular with respect to the contour of bottles and/or labels or images on bottles, in which both transmitted light and reflected light from only one illumination device (4), in connection with optical means (6), can be applied to the surface area of a bottle (2) to be investigated, and the illumination device (4) is arranged above a bottle (2) to be investigated, **characterized in that**
the illumination device illuminates the bottle mostly parallel to its bottle axis (2') from above,
some of the light emanating from the illumination device (4) can be deflected by the optical means (6) virtually transversely with respect to the bottle axis (2') and directed onto the surface area of the bottle (2),
the optical means (6) are configured as light scattering or reflective surface elements, and
the light exit surface of the illumination device (4) is greater than the perpendicular projection surface of a bottle (2) to be investigated.

2. Apparatus according to Claim 1, **characterized in that**
the image recording device (5) images the surface area of the bottle (2) virtually transversely with respect to the bottle axis (2').

3. Apparatus according to Claim 1 or 2, **characterized in that**
a transport device (3) for conveying, in particular continuously, bottles (2) is present, above which the illumination device (4) is arranged.

4. Apparatus according to Claim 3, **characterized in that**
the image recording device (5) is arranged laterally next to the transport device (3).

5. Apparatus according to Claim 3 or 4, **characterized in that**
the optical means (6) are arranged laterally next to the transport device (3), preferably at that side of the transport device that is located opposite the image recording device (5).

6. Apparatus according to one of preceding Claims 1 to 5, **characterized in that**
means (7a, 7b, 7a', 7b'), in particular mirrors, for producing a plurality of imaging beam paths (8a, 8b) which pass through the surface area of the bottle (2) from circumferentially differing directions are arranged between the image recording device (5) and a bottle (2) to be investigated.

7. Apparatus according to Claim 1 and 6,
**characterized in that**
the surface elements (6) are arranged in extension of the imaging beam paths (8a, 8b), in particular at right angles with respect to the optical axis of the associated imaging beam path.

8. Apparatus according to one of preceding Claims 1 to 7, **characterized in that**
the illumination device (4) has a lens (10).

9. Apparatus according to Claim 1 and 8,
**characterized in that**
as the radial distance to the centre of the illumination device (4) increases, the light exits with an increasing angle inclined with respect to the bottle axis (2').

## Revendications

1. Dispositif d'inspection (1) pour des bouteilles (2) ou récipients analogues, avec des dispositifs d'éclairage (4) pour un éclairage par transmission et incident et au moins un dispositif de prise de vues (5) pour reproduire la surface d'enveloppe des bouteilles éclairées et évaluer les images, en particulier par rapport au contour de bouteilles et/ou à des étiquettes ou images sur des bouteilles, dans lequel la surface d'enveloppe d'une bouteille (2) à analyser ne peut être sollicitée, aussi bien en lumière transmise qu'en lumière incidente, que par un dispositif d'éclairage unique (4) en relation avec des moyens optiques (6), et le dispositif d'éclairage (4) est disposé au-dessus d'une bouteille (2) à analyser,
**caractérisé en ce que**
- le dispositif d'éclairage éclaire la bouteille à partir du haut principalement parallèlement à l'axe (2') de celle-ci,
- une partie de la lumière provenant du dispositif d'éclairage (4) peut être déviée par les moyens optiques (6) approximativement de façon transversale à l'axe (2') de la bouteille et être dirigée sur la surface d'enveloppe de la bouteille (2),
- les moyens optiques (6) sont réalisés sous forme d'éléments plans diffusants ou réfléchissants, et
- la surface d'émergence de la lumière du dispositif d'éclairage (4) est plus grande que la surface de projection verticale d'une bouteille (2) à contrôler.

2. Dispositif suivant la revendication 1, **caractérisé en ce que** le dispositif de prise de vues (5) reproduit la surface d'enveloppe de la bouteille (2) approximativement transversalement à l'axe (2') de la bouteille.

3. Dispositif suivant l'une des revendications 1 ou 2,
**caractérisé en ce qu'** un dispositif de transport (3) pour le transport en particulier continu de bouteilles (2) est prévu, au-dessus duquel est disposé le dispositif d'éclairage (4).

4. Dispositif suivant la revendication 3, **caractérisé en ce que** le dispositif de prise de vues (5) est disposé latéralement à côté du dispositif de transport (3).

5. Dispositif suivant l'une des revendications 3 et 4,
**caractérisé en ce que** les moyens optiques (6) sont disposés latéralement à côté du dispositif de transport (3), de préférence sur le côté du dispositif de transport opposé au dispositif de prise de vues (5).

6. Dispositif suivant l'une au moins des revendications précédentes 1 à 5, **caractérisé en ce que** des moyens (7a, 7b, 7a', 7b'), en particulier des miroirs, sont disposés entre le dispositif de prise de vues (5) et une bouteille à analyser (2) pour produire plusieurs faisceaux de reproduction (8a, 8b) traversant la surface d'enveloppe de la bouteille (2) à partir de directions circonférentielles différentes.

7. Dispositif suivant les revendications 1 et 6, **caractérisé en ce que les** éléments plans (6) sont disposés dans le prolongement des faisceaux de reproduction (8a, 8b), en particulier perpendiculairement à l'axe optique du faisceau de reproduction associé.

8. Dispositif suivant l'une au moins des revendications précédentes 1 à 7, **caractérisé en ce que** le dispositif d'éclairage (4) présente une lentille (10).

9. Dispositif suivant les revendications 1 et 8, **caractérisé en ce que** la lumière émerge avec une inclinaison d'un angle de plus en plus grand par rapport à l'axe (2') de la bouteille, avec une distance radiale croissante par rapport au centre du dispositif d'éclairage (4).
